(19) Europäisches Patentamt
European Patent Office
Office européen des brevets

(11) EP 3 702 342 A1

(12) EUROPEAN PATENT APPLICATION

(43) Date of publication:
02.09.2020 Bulletin 2020/36

(51) Int Cl.:
C04B 41/00 (2006.01)  C04B 41/52 (2006.01)
C04B 41/87 (2006.01)  C04B 41/89 (2006.01)

(21) Application number: 19216307.9

(22) Date of filing: 13.12.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.02.2019 US 201916286723

(71) Applicant: Hamilton Sundstrand Corporation
Charlotte, NC 28217-4578 (US)

(72) Inventors:
• POTEET, Steven
  Ashland, MA 01721 (US)
• RICHARDS, Gavin Charles
  Poughkeepsie, NY New York 12603 (US)
• COHEN, Zachary
  West Hartford, CT Connecticut 06119 (US)

(74) Representative: Dehns
St. Bride's House
10 Salisbury Square
London EC4Y 8JD (GB)

(54) OXIDATION PROTECTION OF COMPOSITES

(57) A method for producing a coating system includes depositing (50) a first slurry on a composite substrate, the first slurry including a first carrier fluid and boron-containing powder, removing (54) the first carrier fluid and consolidating the boron-containing powder to form a boron-containing layer on the composite substrate, depositing (56) a silicon-containing coating on the boron-containing layer and consolidating the silicon-containing coating to form a silicon-containing layer, and depositing (58) at least one layer of phosphate on the silicon-containing layer.

FIG.2

**Description**

**BACKGROUND**

Certain composites, such as those formed of carbon fibers disposed in a carbon matrix (known as carbon/carbon composites), experience oxidation, particularly when used at elevated temperatures in the presence of air and/or moisture. The carbon reacts with oxygen in the surrounding environment to form reactant products of carbon monoxide and carbon dioxide that are lost as volatile gas. The loss of carbon from the composite may debit structural integrity.

In order to seal the composite against oxygen, seal coatings have been used on the exterior of the composite. As an example, a silicon carbide seal coating has been used as a primary sealant. The coating, however, may contain cracks that allow oxygen infiltration. To "self-repair" the cracks, modern seal coatings contain boron mixed in the seal coating. The boron reacts with the oxygen to form boron oxide glass. The boron oxide glass can flow to the cracks, where it may react with silicate that is formed from the oxidation of silicon carbide. The resulting borosilicate glass is stable in the cracks and thus serves as an oxygen barrier. Such seal coatings are typically formed by chemical vapor deposition (CVD) in order to obtain a well-dispersed, pore-free coating. Although effective, CVD add significant expense.

**SUMMARY**

A method for producing a coating system according to an example of the present disclosure includes depositing a first slurry on a composite substrate, the first slurry including a first carrier fluid and boron-containing powder, removing the first carrier fluid and consolidating the boron-containing powder to form a boron-containing layer on the composite substrate, depositing a silicon-containing coating on the boron-containing layer and consolidating the silicon-containing coating to form a silicon-containing layer, and depositing at least one layer of aluminum phosphate slurry or borophosphate slurry on the silicon-containing layer and curing the aluminum phosphate slurry or borophosphate slurry.

In a further embodiment of any of the preceding examples, the boron-containing powder contains boron-containing particles of disparate size in a ratio, by weight, from 6:4 to 8:2.

In a further embodiment of any of the preceding examples, the silicon-containing coating includes a second slurry containing a second carrier fluid and silicon-containing powder, the silicon-containing powder contains silicon carbide particles of disparate size in a ratio, by weight, from 6:4 to 8:2.

In a further embodiment of any of the preceding examples, the silicon-containing coating includes polycarbosilane.

In a further embodiment of any of the preceding examples, the silicon-containing coating includes silicon-containing powder dispersed in the polycarbosilane.

In a further embodiment of any of the preceding examples, the first slurry further includes a borosilicate powder.

In a further embodiment of any of the preceding examples, the first slurry has a ratio, by weight, of the boron-containing powder to the borosilicate powder from 10:1 to 1:1.

In a further embodiment of any of the preceding examples, the ratio is from 2:1 to 7:1.

In a further embodiment of any of the preceding examples, the silicon-containing coating includes a second slurry containing a second carrier fluid, silicon-containing powder, and borosilicate powder, and the second slurry has a ratio, by weight, of the silicon-containing powder to the borosilicate powder from 10:1 to 1:1.

In a further embodiment of any of the preceding examples, the ratio is from 2:1 to 7:1.

A method for producing a coating system according to an example of the present disclosure includes depositing a first slurry on a composite substrate, the first slurry including a first carrier fluid and boron-containing powder, and the boron-containing powder contains boron-containing particles of disparate size in a ratio, by weight, from 6:4 to 8:2, removing the first carrier fluid and consolidating the boron-containing powder to form a boron-containing layer on the composite substrate, depositing a silicon-containing coating on the boron-containing layer and consolidating the silicon-containing coating to form a silicon-containing layer, and depositing at least one layer of aluminum phosphate slurry or borophosphate slurry on the silicon-containing layer and curing the aluminum phosphate slurry or borophosphate slurry.

In a further embodiment of any of the preceding examples, the first slurry further includes a borosilicate powder.

In a further embodiment of any of the preceding examples, the first slurry has a ratio, by weight, of the boron-containing powder to the borosilicate powder from 10:1 to 1:1.

In a further embodiment of any of the preceding examples, the ratio is from 2:1 to 7:1.

In a further embodiment of any of the preceding examples, the silicon-containing coating includes a second slurry containing a second carrier fluid, silicon-containing powder, and borosilicate powder, and the second slurry has a ratio, by weight, of the silicon-containing powder to the borosilicate powder from 10:1 to 1:1.

In a further embodiment of any of the preceding examples, the ratio of the silicon-containing powder to the borosilicate powder is from 2:1 to 7:1.

A method for producing a coating system according to an example of the present disclosure includes depositing a first slurry on a composite substrate, the first slurry including a first carrier fluid, boron-containing powder, and borosilicate powder, and the first slurry has a ratio, by weight, of the boron-containing powder to the borosilicate powder from 10:1 to 1:1, removing the first carrier fluid and consolidating the boron-containing powder and the borosilicate powder to form a boron-containing layer on the composite substrate, depositing a silicon-containing coating on the boron-containing layer and consolidating the silicon-containing coating to form a silicon-containing layer, and depositing at least one layer of aluminum phosphate slurry or borophosphate slurry on the silicon-containing layer and curing the aluminum phosphate slurry or borophosphate slurry.

In a further embodiment of any of the preceding examples, the ratio is from 2:1 to 7:1.

In a further embodiment of any of the preceding examples, the silicon-containing coating includes a second slurry containing a second carrier fluid, silicon-containing powder, and borosilicate powder, and the second slurry has a ratio, by weight, of the silicon-containing powder to the borosilicate powder from 10:1 to 1:1.

In a further embodiment of any of the preceding examples, the ratio of the silicon-containing powder to the borosilicate powder is from 2:1 to 7:1.

**BRIEF** DESCRIPTION OF THE DRAWINGS

The various features and advantages of the present disclosure will become apparent to those skilled in the art from the following detailed description. The drawings that accompany the detailed description can be briefly described as follows.

> Figure 1 illustrates an example article having a composite substrate and a multilayered oxidation protection coating system.
> Figure 2 illustrates an example method for producing the coating system.

**DETAILED DESCRIPTION**

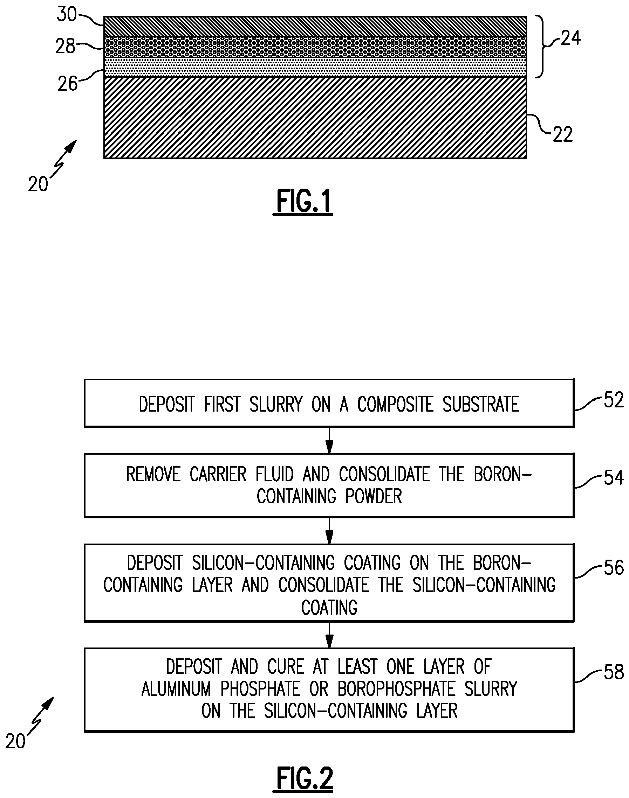

Figure 1 illustrates an example article 20. As will be appreciated, the article 20 is shown schematically; however, it is to be understood that the article 20 may be any component that would benefit from the present disclosure, such as but not limited to brake components and gas turbine engine components.

The article 20 includes a composite substrate 22 and protective barrier coating system 24 disposed on the substrate 22. The substrate 22 defines the geometry of the article 20, and the coating system 24 conforms to the shape of the substrate 22 (i.e. conformal coatings). As an example, in order to prevent oxygen infiltration, the coating system 24 may fully encase the substrate 22 such that the substrate 22 has no exposed exterior surfaces.

In the illustrated example, the substrate 22 is a carbon/carbon composite, although it is to be understood that the substrate 22 may alternatively be formed of other types of composites that are especially prone to oxidation. The coating system 24 includes a boron-containing layer 26, a silicon-containing layer 28, and a seal layer 30.

The boron-containing layer 26 can include elemental boron but more typically will include a boron-containing compound. Such compounds may include boron carbide in the form of $B_4C$, titanium boride in the form of $TiB_2$, or mixtures of these compounds. In further examples, the boron-containing layer 26 includes only the boron carbide, only the titanium boride, or only a mixture of boron carbide and titanium boride. In one additional example, the boron-containing layer 26 also includes a binder material. For instance, the binder material is borosilicate glass and is present in the boron-containing layer 26 in a ratio, by weight, of the boron-containing compound to the borosilicate that is from 10:1 to 1:1. In one further example, the ratio is from 2:1 to 7:1

The silicon-containing layer 28 can include elemental silicon but more typically will include a silicon-containing compound. Such compounds may include silicon carbide (SiC) or direct precursors to silicon carbide that are able to form silicon oxides upon oxidation. Other examples include metal silicides and silicon carbonitride. In one example, the silicon-containing layer 28 includes only silicon carbide, metal silicide, or silicon carbonitride. In an additional example, the silicon-containing layer 28 also includes a binder material. For instance, the binder material is borosilicate glass and is present in the silicon-containing layer 28 in a ratio, by weight, of the silicon-containing compound to the borosilicate that is from 10:1 to 1:1. In one further example, the ratio is from 2:1 to 7:1.

The seal layer 30 is an exterior (outermost) self-healing layer and serves as an initial barrier against oxygen and moisture infiltration, at least at temperatures below about 650°C (1200°F). For instance, the seal layer 30 includes a glassy mixture of o-aluminum phosphate (AlPO4), aluminum metaphosphate (Al(PO3)3), and intermediate amorphous aluminum phosphate compounds. The seal layer 30 is formed from an aluminum phosphate slurry with an Al:P ratio of 1:2-1:5, which upon curing at temperatures above 700°C forms the glassy mixture of o-aluminum phosphate (AlPO4), aluminum metaphosphate (Al(PO3)3), and intermediate amorphous aluminum phosphate compounds. Alternatively or in addition to the above slurry a borophosphate slurry may be used. The borophosphate slurry is composed of ammonium dihydrogen phosphate (NH4H2PO4), water, o-AlPO4, and a borophosphate glass. In various embodiments, the borophosphate glass composition may be represented by the formula $a(A'_2O)_x(P_2O_5)_{y1}b(G_fO)_{y2}c(A"O)_z$:

> A' is selected from: lithium, sodium, potassium, rubidium, cesium, and mixtures thereof;
> $G_f$ is selected from: boron, silicon, sulfur, germanium, arsenic, antimony, and mixtures thereof;
> A" is selected from: vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, and mixtures thereof;

a is a number in the range from 1 to about 5;

b is a number in the range from 0 to about 10;

c is a number in the range from 0 to about 30;

x is a number in the range from about 0.050 to about 0.500;

$y_1$ is a number in the range from about 0.100 to about 0.950;

$y_2$ is a number in the range from 0 to about 0.20; and

z is a number in the range from about 0.01 to about 0.5;

$$(x + y_1 + y_2 + z) = 1;$$

and

$$x < (y_1 + y_2).$$

In the illustrated example, the boron-containing layer 26 is disposed directly on the substrate 22, followed by the silicon-containing layer 28 disposed directly on the boron-containing layer 26, and followed by the seal layer 30 disposed directly on the silicon-containing layer 28. It is contemplated that the coating system 24 may also contain additional layers, which may include additional silicon- and/or boron-containing layers and/or layers of different compositions. However, for reasons discussed further below, in the arrangement of layers, the silicon-containing layer 28 should be disposed immediately adjacent the boron-containing layer 26.

During use of the article 20, particularly at temperatures over 650°C (1200°F), oxygen may readily diffuse through the seal layer 30 into the silicon-containing layer 28 and boron-containing layer 26. At such temperatures, silicon in the silicon-containing layer 28 reacts with oxygen to form silicates. Boron from the boron-containing layer 28 also reacts with the oxygen to form boron oxide. The boron oxide moves into the silicon-containing layer 28 and, in particular, moves into cracks in the silicon-containing layer 28. Although not limited, the boron oxide may move via vapor transport and/or capillary flow. The silicon-containing layer 28, being arranged immediately adjacent the boron-containing layer 26, minimizes the transport distance of boron oxide from the boron-containing layer 26 to the silicon-containing layer 28. The boron oxide reacts with the silicon oxide to form borosilicate glass, which is stable under the same oxidizing conditions and acts to plug the crack against further oxygen infiltration. The arrangement of the boron-containing layer 26 immediately next to the silicon-containing layer 28, with no other layers there between to hinder movement, thus enables facile cooperation between the layers 26/28 to form the borosilicate glass.

Figure 2 depicts a method 50 for producing the coating system 24. As will be appreciated, the method 50 involves powder processing rather than chemical vapor deposition. Additionally, the method 50 provides for deposition of dense layers 26 and 28 that together serve as an effective oxygen barrier comparable to prior seal coatings, but at a lower cost by the avoidance of CVD

The method 50 includes four steps, although it is to be understood that one or more of the steps may be divided into sub-steps or that one or more of the steps may be functionally combined. Initially, step 52 relates to forming the boron-containing layer 26. At step 52 a first slurry is deposited on the composite substrate 22, such as by painting, dipping, or spraying. The first slurry includes a first carrier fluid and boron-containing powder. As an example, the carrier fluid is water, although other solvents may additionally or alternatively be used. The composition of the first slurry with regard to the type of carrier fluid and amounts of carrier fluid and boron-containing powder may be varied in order to obtain a desirable viscosity for applying the slurry to the substrate 22. As an example, the first slurry may have, by weight, approximately 20% to 50% of the boron-containing powder and a remainder of the carrier fluid and any processing additives (e.g., surfactants). In one further example, the first slurry may have approximately 30% to 40% of the boron-containing powder, or more particularly approximately 35% of the boron-containing powder.

If borosilicate binder material is to be included in the boron-containing layer 26, the first slurry may further include a borosilicate powder. For example, the first slurry has a ratio, by weight, of the boron-containing powder to the borosilicate powder that is from 10:1 to 1:1, or from 2:1 to 7:1, to produce the amount of borosilicate prescribed in the example above of the boron-containing layer 26.

The boron containing powder can be elemental boron but more typically will be in the form of a boron-containing compound, as discussed above for the boron-containing layer 26. Such compounds may include boron carbide in the form of $B_4C$, titanium boride in the form of $TiB_2$, or mixtures thereof.

After depositing the first slurry on the substrate 22, the carrier fluid is removed at step 54, leaving the dry boron-containing powder on the substrate 22. For instance, the carrier fluid is removed by evaporation, which may be accelerated by heating the substrate 22 and first slurry. Most typically, the heating temperature will be near or above the boiling point of the carrier fluid. In this example, the act of drying also serves to consolidate the boron-containing powder in that the powder, which is initially free in the slurry, deposits on the surface of the substrate 22. Additional thermal processing may be used to consolidate by sintering.

The sizes of boron-containing particles in the boron-containing powder of the first slurry may be carefully controlled to increase packing density once deposited on the substrate 22. The packing density (or packing fraction) is the amount of space by volume that is taken up by the boron-containing particles (and the remaining space between the particles is empty). The packing density can be expressed as a percentage, e.g., 60%, 70%, or 80%.

In order to obtain good oxidation resistance and functionality of the layers 26/28, it is desirable to produce the boron-containing layer 26 and the silicon-containing layer 28 with minimal porosity. Porosity provides a path for oxygen infiltration. Layers that are deposited by CVD have low porosity, and in order for powder processing to be a viable alternative for CVD-deposited layers the powder processing must also produce layers with low porosity. In this regard, for the purpose of producing a dense, low-porosity boron-containing layer 26, the packing density of the powder is increased or maximized beyond that which is possible from random packing of mono-sized particles. For instance, the boron-containing particles are of two disparate sizes. As used herein, the "size" of the particles refers to average particle diameters, which are typically reported by powder suppliers in accordance with standard particle size measurements. A powder that has two disparate sizes will therefore have a mixture of particles, one having a large average size and another having a small average size.

Assuming the particles are approximately spherical, once deposited on the substrate 22 the particles that are the larger of the size pack together. The particles that are the smaller of the sizes pack into interstices between the larger particles. Once deposited onto the substrate 22, the deposited boron-containing particles have a packing density of 50% or greater from the use of the two disparate sizes of particles in the boron-containing powder. As a comparison, random packing of mono-sized particles generally results in a packing density of less than 45%, which would be expected to result in significant porosity in the final layer.

Substantially greater packing densities, and thus low porosity in the boron-containing layer 26, can be obtained by coordination between the two sizes and amounts of the boron-containing particles. For example, to obtain a packing density of at least 70% or greater, the two disparate sizes will differ in size by an order of magnitude, i.e. the larger size is greater than the smaller size by a factor of at least 10. Additionally, the boron-containing powder contains boron-containing particles in a ratio, by weight, of large size to small size from 6:4 to 8:2, or more preferably about 7:3. This assumes that the particles are of the same composition and physical density, such that the ratio is also representative of a volume ratio. If the two sizes of particles were of different compositions (e.g., large size boron oxide particles and small size titanium boride particles), a volume ratio of large size to small size from 6:4 to 8:2 should be used instead of a weight ratio.

A single iteration or multiple iterations of depositing and drying the first slurry on the substrate 22 may be used to produce a desired thickness of the boron-containing layer 26. The boron-containing powder may be consolidated in step 54 to form the boron-containing layer 26 on the substrate 22 by drying or by drying and thermal consolidation by heating the substrate 22 and boron-containing powder. For example, especially if the borosilicate binder is used, a heating temperature of approximately 1148°C (2100°F) may be used. The heating may be conducted in an inert environment, such as in an inert process gas that has little or no oxygen. Functionally, the drying and consolidation may be combined in a single process. Alternatively, the consolidation may be combined with heating in a later step, such as a heating step used in the formation of the silicon-containing layer 28 or in formation of the seal layer 30.

Following formation of the boron-containing layer 26, step 56 relates to forming the silicon-containing layer 28. Two different types of deposition processes are contemplated to form the silicon-containing layer 28, including powder processing and preceramic polymer processing. The powder processing is similar to the process described above for the deposition of the boron-containing layer 26, except that a silicon-containing powder is used in place of the boron-containing powder. For instance, a second slurry is deposited as a silicon-containing slurry coating on the boron-containing layer 26, such as by painting, dipping, or spraying. The second slurry includes a second carrier fluid and silicon-containing powder. As an example, the carrier fluid is water, although other solvents may additionally or alternatively be used. The composition of the second slurry with regard to the type of carrier fluid and amounts of carrier fluid and silicon-containing powder may be varied in order to obtain a desirable viscosity for applying the slurry. As an example, the second slurry may have, by weight, approximately 20% to 50% of the silicon-containing powder and a remainder of the carrier fluid and any processing additives (e.g., surfactants). In one further example, the second slurry may have approximately 30% to 40% of the silicon-containing powder, or more particularly approximately 35% of the silicon-containing powder.

If borosilicate binder material is to be included in the silicon-containing layer 28, the second slurry may further include a borosilicate powder. For example, the second slurry has a ratio, by weight, of the silicon-containing powder to the borosilicate powder that is from 10:1 to 1:1, or from 2:1 to 7:1, to produce the amount of borosilicate prescribed in the example above of the silicon-containing layer 28.

The silicon-containing powder can be elemental silicon but more typically will be in the form of a silicon-containing compound, as discussed above for the silicon-containing layer 28. Such compounds may include silicon carbide.

After depositing the second slurry on the boron-containing layer 26, the carrier fluid is removed in step 56, leaving the dry silicon-containing powder on the boron-containing layer 26. For instance, the carrier fluid is removed by evaporation, which may be accelerated by heating, as discussed above. If a glass binder is used, e.g. borosilicate, a post-heat treatment of up to 1148°C (2100°F) may be used to sinter the glass composition, rendering the layer durable and immobile.

Like the boron-containing particles, the silicon-containing particles in the silicon-containing powder of the second slurry may be carefully controlled to increase packing density once deposited on the boron-containing layer 26. For instance, the silicon-containing particles are also of two disparate sizes such that, once deposited onto the boron-containing layer 26, the deposited silicon-containing particles have a packing density of 50% or greater from the use of the two disparate sizes of particles.

To obtain a packing density of at least 70% or greater, the two disparate sizes will differ in size by an order of magnitude, i.e. the larger size is greater than the smaller size by a factor of at least 10. Additionally, the silicon-containing powder contains silicon-containing particles in a ratio, by weight, of large size to small size from 6:4 to 8:2, or more preferably about 7:3. Again, this assumes that the particles are of the same composition and physical density, such that the ratio is also representative of a volume ratio, and if the two sizes of particles are of different compositions a volume ratio of large size to small size from 6:4 to 8:2 should be used instead.

A single iteration or multiple iterations of depositing and drying the second slurry on the boron-containing layer 26 may be used to produce a desired thickness of the silicon-containing layer 28. After depositing and drying, the silicon-containing powder may be consolidated in step 56 to form the silicon-containing layer 28. For instance, the consolidation involves thermal consolidation by heating the silicon-containing powder. Functionally, the drying and consolidation may be combined in a single heating process. Alternatively, the consolidation and heating may be combined with a later heating step in the deposition of the seal layer 30.

Alternatively, rather than applying a silicon-containing coating from a slurry, the silicon-containing coating is applied by preceramic polymer processing. For example, a preceramic polymer is applied on the boron-containing layer 26, such as by spraying, painting, or dipping. The preceramic polymer is then thermally treated for consolidation, i.e., pyrolyzed, to convert the polymer into ceramic. In one example, the polymer is polycarbosilane and is thermally converted into silicon carbide. In particular, the preceramic processing may be used to provide better silicon carbide dispersion uniformity in comparison to powder processing. There may be variations from batch-to-batch in dispersion using powder processing due to variations in the suspension and agglomeration of particles in the slurry, which can result in localized variations in density and thickness. The preceramic polymer, on the other hand, provides atomic level dispersion due to the distribution of silicon and carbon in the polymer backbone, which leads to a more uniform dispersion of the silicon carbide and more uniform density and thickness. The uniformity of density and thickness may influence performance, especially with regard to spallation.

In one example modification of the preceramic processing, the preceramic polymer includes silicon-containing powder dispersed in the polycarbosilane. For instance, the silicon-containing powder may be silicon carbide powder. In one example, a mixture of polycarbosilane and silicon-containing powder includes, by weight, 80% or more of the polycarbosilane and a remainder (i.e., 20% or less) of the silicon-containing powder. In yet a further example, the preceramic polymer is combined as a binder material into the powder process described above. For instance, the preceramic polymer, which may be a liquid, is added to the second slurry and, once deposited and thermally converted, serves to bind the silicon-containing particles to one another and to the boron-containing layer 26. The silicon carbide that results upon thermal conversion of the preceramic polymer serves to further increase packing density of the silicon-containing layer 28 as well as reduce porosity. In one example, the second slurry may include, by weight, approximately 1% to 10% of the preceramic polymer.

Step 58 relates to forming the seal layer 30 and includes depositing at least one layer of aluminum phosphate slurry or borophosphate slurry on the silicon-containing layer 28. As an example, the seal layer is deposited by slurry processing, similar to as described above except that the slurry includes aluminum phosphate and/or borophosphate and phosphoric acid in a carrier fluid. Step 58 may thus include depositing, drying, and thermally curing the slurry. As an example, the slurry may be cured at a temperature of at least about 718°C (1325°F) for two hours. Such processing of aluminum phosphate is generally known and thus not discussed further herein.

The following non-limiting examples demonstrate aspects of the above examples.

EXAMPLE 1

A first aqueous slurry is prepared and contains 35% by weight of boron carbide powder and a remainder of water. The boron carbide powder contains a 7:3 ratio by weight of large size boron carbide particles to small size boron carbide particles. The large size particles have an average particle size of 9.3 micrometers, and the small size particles have an average particle size of 0.7 micrometers.

EXAMPLE 2

A second aqueous slurry is prepared and contains 50% by weight of silicon carbide powder and a remainder of water. The silicon carbide powder is monosized and has an average particle size of 37 micrometers.

EXAMPLE 3

A second aqueous slurry is prepared and contains 45% by weight of silicon carbide powder and a remainder of water. The silicon carbide powder contains a 7:3 ratio by weight of large size silicon carbide particles to small size silicon carbide particles. The large size particles have an average particle size of 17 micrometers, and the small size particles have an average particle size of 1 micrometer.

EXAMPLE 4

The first slurry of EXAMPLE 1 is applied to a carbon/carbon composite substrate, followed by drying at a temperature of 100°C for 10 minutes, and followed by sintering at a temperature of 1148°C (2100°F) for 2 hours.

EXAMPLE 5

The second slurry of EXAMPLE 2 is applied to the product of EXAMPLE 4 and is followed by drying at a temperature of 100°C for 10 minutes.

EXAMPLE 6

The second slurry of EXAMPLE 3 is applied to the product of EXAMPLE 4 and is followed by drying at a temperature of 100°C for 10 minutes.

EXAMPLE 7

A polycarbosilane polymer is applied to the product of EXAMPLE 4 and is followed by thermal conversion at a minimum temperature of 849°C (1560°F) for 2 hours to produce amorphous SiC, and 1260°C (2300°F) for a minimum of 2 hours if nanocrystalline SiC is desired.

EXAMPLE 8

EXAMPLE 1 is modified by the addition of borosilicate powder (frit) to the first slurry in a ratio by weight of 3.5:1 of boron carbide powder to borosilicate powder.

EXAMPLE 9

EXAMPLE 2 is modified by the addition of borosilicate powder (frit) to the second slurry in a ratio by weight of 4.5:1 of silicon carbide powder to borosilicate powder.

EXAMPLE 10

EXAMPLE 3 is modified by the addition of borosilicate powder (frit) to the second slurry in a ratio by weight of 5:1 of silicon carbide powder to borosilicate powder.

EXAMPLE 11

An aqueous aluminum phosphate slurry is prepared and includes an Al:P ratio of 1:2-1:5.

EXAMPLE 12 (COMPARATIVE)

Sample 1 is prepared by the following process. An aqueous slurry is prepared and contains 35% by weight of boron carbide powder, 10% by weight of borosilicate powder, and a remainder of water. The boron carbide powder is monosized. The slurry is applied to a carbon/carbon composite substrate, followed by drying at a temperature of 100°C for 10 minutes, and followed by sintering at a temperature of 1148°C (2100°F) for 2 hours to produce a boron-containing layer.

The second aqueous slurry of EXAMPLE 2 is applied to the boron-containing layer, followed by drying at a temperature of 100°C for 10 minutes to produce a silicon-containing layer.

The aluminum phosphate slurry of EXAMPLE 11 is then applied to the silicon-containing layer, followed by curing at 718°C (1325°F) to form a seal layer composed of a glassy mixture of o-aluminum phosphate ($AlPO_4$), aluminum metaphosphate ($Al(PO_3)_3$), and intermediate amorphous aluminum phosphate compounds. This process is repeated to produce a second seal layer.

Sample 2 is prepared by the following process. A first aqueous slurry is prepared and contains 35% by weight of boron carbide powder, 10% by weight of borosilicate powder, and a remainder of water. The boron carbide powder contains a 7:3 ratio by weight of large size boron carbide particles to small size boron carbide particles. The large size particles have an average particle size of 9.3 micrometers, and the small size particles have an average particle size of 0.7 micrometers. The first slurry is applied to a carbon/carbon composite substrate, followed by drying at a temperature of 100°C for 10 minutes, and followed by sintering at a temperature of 1148°C (2100°F) for 2 hours to produce a boron-containing layer.

The second aqueous slurry of EXAMPLE 2 is applied to the boron-containing layer, followed by drying at a temperature of 100°C for 10 minutes to produce a silicon-containing layer.

The aluminum phosphate slurry of EXAMPLE 11 is then applied to the silicon-containing layer, followed by curing at 718°C (1325°F) to form a seal layer composed of a glassy mixture of o-aluminum phosphate ($AlPO_4$), aluminum metaphosphate ($Al(PO_3)_3$), and intermediate amorphous aluminum phosphate compounds. This process is repeated to produce a second seal layer.

Sample 1 and Sample 2 are tested in a simulated oxidation test by heating in air at a temperature of 927°C (1700°F) while measuring weight loss. After 5 hours Sample 1 has a weight loss of 6.3% and Sample 2 has a weight loss of 3.8%, demonstrating that the packing density obtained by the disparate particle sizes used in Sample 2 are surprisingly effective in reducing oxidation.

EXAMPLE 13 (COMPARATIVE)

Sample 3 is produced by the following process. An aqueous slurry is prepared and contains 50% by weight of monosized boron carbide powder and a remainder of water. The slurry is applied to a carbon/carbon composite substrate, followed by drying at a temperature of 100°C for 10 minutes to produce a boron-containing layer on the carbon/carbon composite.

The second slurry of EXAMPLE 2 is applied to the boron-containing layer, followed by drying at a temperature of 100°C for 10 minutes to produce a silicon-containing layer.

The aluminum phosphate slurry of EXAMPLE 11 is then applied to the silicon-containing layer, followed by curing at 718°C (1325°F) to form a seal layer composed of a glassy mixture of o-aluminum phosphate ($AlPO_4$), aluminum metaphosphate ($Al(PO_3)_3$), and intermediate amorphous aluminum phosphate compounds. This process is repeated to produce a second seal layer.

An aqueous slurry is prepared and contains 35% by weight of boron carbide powder, 10% by weight of borosilicate powder, and a remainder of water. The boron carbide powder is monosized. The slurry is applied to a carbon/carbon composite substrate, followed by drying at a temperature of 100°C for 10 minutes, and followed by sintering at a temperature of 1148°C (2100°F) for 2 hours to produce a boron-containing layer on the carbon/carbon composite.

A layer of polycarbosilane is applied to the boron-containing layer, followed by baking at a temperature of 149°C (300°F) for 1 hour, followed by pyrolizing at a temperature of 982°C (1800°F) for 2 hours to produce a silicon-containing layer.

The aluminum phosphate slurry of EXAMPLE 11 is then applied to the silicon-containing layer, followed by curing at 718°C (1325°F) to form a seal layer composed of a glassy mixture of o-aluminum phosphate ($AlPO_4$), aluminum metaphosphate ($Al(PO_3)_3$), and intermediate amorphous aluminum phosphate compounds. This process is repeated to produce a second seal layer.

Sample 3 and Sample 4 are tested in a simulated oxidation test by heating in air at a temperature of 927°C (1700°F) while measuring weight loss. After 5 hours Sample 3 has a weight loss of 18.9% and Sample 4 has a weight loss of 9.3%, demonstrating that the uniformity obtained by the polycarbosilane is surprisingly effective in reducing oxidation.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

**Claims**

1.   A method for producing a coating system, the method comprising:

> Depositing (52) a first slurry on a composite substrate, the first slurry including a first carrier fluid and boron-containing powder;
> removing (54) the first carrier fluid and consolidating the boron-containing powder to form a boron-containing layer on the composite substrate;
> depositing (56) a silicon-containing coating on the boron-containing layer and consolidating and/or sintering the silicon-containing coating to form a silicon-containing layer; and
> depositing (58) at least one layer of aluminum phosphate slurry or borophosphate slurry on the silicon-containing layer and curing the aluminum phosphate slurry or borophosphate slurry.

2.   The method as recited in any preceding claim, wherein the boron-containing powder contains boron-containing particles of disparate size in a ratio, by weight, from 6:4 to 8:2.

3.   The method as recited in any preceding claim, wherein the silicon-containing coating includes a second slurry containing a second carrier fluid and silicon-containing powder, the silicon-containing powder contains silicon carbide particles of disparate size in a ratio, by weight, from 6:4 to 8:2.

4.   The method as recited in claim 1, wherein the silicon-containing coating includes polycarbosilane, and optionally wherein the silicon-containing coating includes silicon-containing powder dispersed in the polycarbosilane.

5.   A method for producing a coating system, the method comprising:

depositing a first slurry on a composite substrate, the first slurry including a first carrier fluid and boron-containing powder, and the boron-containing powder contains boron-containing particles of disparate size in a ratio, by weight, from 6:4 to 8:2;

removing the first carrier fluid and consolidating the boron-containing powder to form a boron-containing layer on the composite substrate;

depositing a silicon-containing coating on the boron-containing layer and consolidating the silicon-containing coating to form a silicon-containing layer; and

depositing at least one layer of aluminum phosphate slurry or borophosphate slurry on the silicon-containing layer and curing the aluminum phosphate slurry or borophosphate slurry.

6. The method as recited in any preceding claim, wherein the first slurry further includes a borosilicate powder.

7. The method as recited in claim 6, wherein the first slurry has a ratio, by weight, of the boron-containing powder to the borosilicate powder from 10:1 to 1:1.

8. The method as recited in claim 7, wherein the ratio is from 2:1 to 7:1.

9. The method as recited in any preceding claim, wherein the silicon-containing coating includes a second slurry containing a second carrier fluid, silicon-containing powder, and borosilicate powder, and the second slurry has a ratio, by weight, of the silicon-containing powder to the borosilicate powder from 10:1 to 1:1.

10. The method as recited in claim 9, wherein the ratio of the silicon-containing powder to the borosilicate powder is from 2:1 to 7:1.

11. A method for producing a coating system, the method comprising:

depositing a first slurry on a composite substrate, the first slurry including a first carrier fluid, boron-containing powder, and borosilicate powder, and the first slurry has a ratio, by weight, of the boron-containing powder to the borosilicate powder from 10:1 to 1:1;

removing the first carrier fluid and consolidating the boron-containing powder and the borosilicate powder to form a boron-containing layer on the composite substrate;

depositing a silicon-containing coating on the boron-containing layer and consolidating the silicon-containing coating to form a silicon-containing layer; and

depositing at least one layer of aluminum phosphate slurry or borophosphate slurry on the silicon-containing layer and curing the aluminum phosphate slurry or borophosphate slurry.

12. The method as recited in claim 11, wherein the ratio is from 2:1 to 7:1.

13. The method as recited in claim 12, wherein the silicon-containing coating includes a second slurry containing a second carrier fluid, silicon-containing powder, and borosilicate powder, and the second slurry has a ratio, by weight, of the silicon-containing powder to the borosilicate powder from 10:1 to 1:1.

14. The method as recited in claim 13, wherein the ratio of the silicon-containing powder to the borosilicate powder is from 2:1 to 7:1.

**FIG.1**

| DEPOSIT FIRST SLURRY ON A COMPOSITE SUBSTRATE | 52 |

| REMOVE CARRIER FLUID AND CONSOLIDATE THE BORON-CONTAINING POWDER | 54 |

| DEPOSIT SILICON-CONTAINING COATING ON THE BORON-CONTAINING LAYER AND CONSOLIDATE THE SILICON-CONTAINING COATING | 56 |

| DEPOSIT AND CURE AT LEAST ONE LAYER OF ALUMINUM PHOSPHATE OR BOROPHOSPHATE SLURRY ON THE SILICON-CONTAINING LAYER | 58 |

**FIG.2**

Europäisches
Patentamt

European
Patent Office

Office européen
des brevets

# EUROPEAN SEARCH REPORT

Application Number

EP 19 21 6307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 935 634 A (AEROSPACE RESEARCH INSTITUTE OF MATERIALS AND PROCESSING TECH ET AL.) 20 April 2018 (2018-04-20) * paragraphs [0004], [0021] - [0024]; claims 1-10; examples 1-4 * | 1-14 | INV. C04B41/00 C04B41/52 C04B41/87 C04B41/89 |
| Y | EP 1 834 937 A2 (HONEYWELL INT INC [US]) 19 September 2007 (2007-09-19) * paragraph [0013] - paragraph [0023]; claims 1-6 * | 1-14 | |
| Y | WO 92/19567 A2 (DU PONT [US]) 12 November 1992 (1992-11-12) * examples 2,3 * | 4 | |
| Y | US 6 455 107 B1 (SEKHAR JAINAGESH A [US] ET AL) 24 September 2002 (2002-09-24) * column 4, line 43 - line 59 * | 2,3,5-10 | |
| Y | CN 1 025 575 C (HUAXING AIRCRAFT WHEELS CO [CN]) 3 August 1994 (1994-08-03) * claims 1,2 * | 6-14 | |
| E | EP 3 653 593 A1 (GOODRICH CORP [US]) 20 May 2020 (2020-05-20) * paragraph [0058] - paragraph [0060]; table 2 * * abstract; claims 1-12 * | 1 | TECHNICAL FIELDS SEARCHED (IPC) C04B |
| A | US 4 868 056 A (HASELKORN MICHAEL H [US]) 19 September 1989 (1989-09-19) * the whole document * | 1-14 | |

The present search report has been drawn up for all claims

| Place of search | Date of completion of the search | Examiner |
|---|---|---|
| Munich | 7 July 2020 | Bonneau, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 6307

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2020

| Patent document cited in search report | | Publication date | Patent family member(s) | | Publication date |
|---|---|---|---|---|---|
| CN 107935634 | A | 20-04-2018 | NONE | | |
| EP 1834937 | A2 | 19-09-2007 | EP | 1834937 A2 | 19-09-2007 |
| | | | US | 2007218208 A1 | 20-09-2007 |
| WO 9219567 | A2 | 12-11-1992 | AU | 659666 B2 | 25-05-1995 |
| | | | CA | 2105584 A1 | 23-09-1992 |
| | | | DE | 69203861 T2 | 04-04-1996 |
| | | | EP | 0576626 A1 | 05-01-1994 |
| | | | JP | H06508814 A | 06-10-1994 |
| | | | WO | 9219567 A2 | 12-11-1992 |
| US 6455107 | B1 | 24-09-2002 | AU | 664475 B2 | 16-11-1995 |
| | | | BR | 9306538 A | 15-09-1998 |
| | | | CA | 2137816 A1 | 23-12-1993 |
| | | | DE | 69325815 T2 | 17-02-2000 |
| | | | DE | 69330618 T2 | 04-07-2002 |
| | | | EP | 0663022 A1 | 19-07-1995 |
| | | | EP | 0892085 A2 | 20-01-1999 |
| | | | ES | 2136125 T3 | 16-11-1999 |
| | | | HU | 218031 B | 28-05-2000 |
| | | | RU | 2135643 C1 | 27-08-1999 |
| | | | US | 5364513 A | 15-11-1994 |
| | | | US | 6455107 B1 | 24-09-2002 |
| CN 1025575 | C | 03-08-1994 | NONE | | |
| EP 3653593 | A1 | 20-05-2020 | EP | 3653593 A1 | 20-05-2020 |
| | | | US | 2020148340 A1 | 14-05-2020 |
| US 4868056 | A | 19-09-1989 | CA | 1328057 C | 29-03-1994 |
| | | | US | 4868056 A | 19-09-1989 |

EPO FORM P0459

For more details about this annex : see Official Journal of the European Patent Office, No. 12/82